(19) Europäisches Patentamt
European Patent Office
Office européen des brevets

(11) **EP 2 927 420 A2**

(12) **EUROPEAN PATENT APPLICATION**

(43) Date of publication:
07.10.2015 Bulletin 2015/41

(51) Int Cl.:
*E21B 49/00* (2006.01) *E21B 21/06* (2006.01)

(21) Application number: 14198083.9

(22) Date of filing: 16.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 23.03.2014 US 201461969175 P
14.05.2014 US 201461992919 P
28.07.2014 US 201462029585 P

(71) Applicant: Aspect International (2015) Private
Limited
Singapore 01981 (SG)

(72) Inventor: Rapoport, Uri
Chicago, Illinois 60604 (US)

(74) Representative: Lecomte & Partners
P.O. Box 1623
1016 Luxembourg (LU)

(54) **Means and methods for multimodality analysis and processing of drilling mud**

(57) An analysis system for multimodal analysis of drilling mud (10) is disclosed. analyzing means, preferably and NMR or MRI device (26), are disposed about a drilling mud recirculation system and configured to communicate with the recirculation system's control system. The analyzing means are used to determine the value of a predetermined quality parameter Q. If fails to meet a predetermined quality criterion, the analysis system instructs the recirculation system to perform an action to alter the properties of the drilling mud such that the drilling mud returning to the drill rig will meet the quality criterion.

Fig. 3

EP 2 927 420 A2

## Description

FIELD OF THE INVENTION

The present invention generally pertains to means and method for a multimodality drilling mud analysis and treatment and to an NMR/MRI-based multi-component integrated systems and methods thereof.

BACKGROUND OF THE INVENTION

Drilling muds are complex fluids used to drill oil wells. Their functions include carrying rock cuttings to the surface, maintaining a sufficient pressure against the rock formation, and lubricating and cooling the bit. Drilling muds include oil based muds and water based muds. Oil based mud formulations include a base oil and additives such as water droplets, surfactants, organophilic clays, viscosifiers, etc., that are used to give specific properties to the mud. Drilling muds are often described as thixotropic shear thinning fluids with a yield stress. Due to their complex composition, drilling muds exhibit an internal structure which is likely to modify according to the flowing and shear conditions, which may lead to non-homogenous phenomena. It is therefore important to develop investigation techniques allowing visualizing the internal structure of the fluid in parallel to rheological measurements.

On a drilling rig, mud is pumped from the mud pits through the drill string where it sprays out of nozzles on the drill bit, cleaning and cooling the drill bit in the process. The mud then carries the crushed or cut rock ("cuttings") up the annular space ("annulus") between the drill string and the sides of the hole being drilled, up through the surface casing, where it emerges back at the surface. Cuttings are then filtered out with either a shale shaker, or the newer shale conveyor technology, and the mud returns to the mud pits. The mud pits let the drilled "fines" settle; the pits are also where the fluid is treated by adding chemicals and other substances.

The returning mud can contain natural gases or other flammable materials which will collect in and around the shale shaker/conveyor area or in other work areas. Because of the risk of a fire or an explosion if they ignite, special monitoring sensors and explosion-proof certified equipment is commonly installed, and workers are advised to take safety precautions. The mud is then pumped back down the hole and further recirculated. After testing, the mud is treated periodically in the mud pits to ensure properties which optimize and improve drilling efficiency, borehole stability, and other requirements as listed below.

Drilling muds are classified based on their fluid phase, alkalinity, dispersion and the type of chemicals used. Dispersed systems are freshwater mud - low pH mud (7.0-9.5) that includes spud, bentonite, natural, phosphate treated muds, organic mud and organic colloid treated mud. High pH muds have a pH above about 9.5. Water based drilling mud represses hydration and dispersion of clay. There are four types: high pH lime muds, and low pH gypsum, seawater and saturated salt water muds. Non-dispersed systems are low-solids mud. These muds contain less than 3 to 6% solids by volume and less than 9.5 lbs/gal solids by weight. Most muds of this type are water-based with varying quantities of bentonite and a polymer. Emulsions are usually selected from oil in water (oil emulsion muds) and water in oil (invert oil emulsion muds). Oil based muds contain oil as the continuous phase and water as a contaminant, not as an element in the design of the mud. They typically contain less than 5% (by volume) water. Oil based muds are usually a mixture of diesel fuel and asphalt, however they can be based on produced crude oil and mud, see M. G. Prammer, E. Drack, G. et al. 2001. The Magnetic-Resonance While-Drilling Tool: Theory and Operation, SPE Reservoir Evaluation & Engineering 4(4) 72495-PA.

Coussot et al. (Oil & Gas Science and Technology - Rev. IFP, 59(1) 2004 pp. 23-29) report rheological experiments coupled to magnetic resonance imaging (MRI). Using this technique, they have determined the velocity profile in a viscometric flow. Coussot *et al* did not disclose or teach use of MRI in treatment of recycled drilling mud.

US patent 6268726 to Numar Corporation hereafter '726) discloses an NMR measurement-while-drilling tool having the mechanical strength and measurement sensitivity to perform NMR measurements of an earth formation while drilling a borehole, and a method and apparatus for monitoring the motion of the measuring tool in order to take this motion into account when processing NMR signals from the borehole. '726 further discloses an apparatus wherein its tool has a permanent magnet with a magnetic field direction substantially perpendicular to the axis of the borehole, a steel collar of a non-magnetic material surrounding the magnet, antenna positioned outside the collar, and a soft magnetic material positioned in a predetermined relationship with the collar and the magnet that helps to shape the magnetic field of the tool. Due to the non-magnetic collar, the tool can withstand the extreme conditions in the borehole environment while the borehole is being drilled. Motion management apparatus and method are employed to identify time periods when the NMR measurements can be taken without the accuracy of the measurement being affected by the motion of the tool or its spatial orientation.

Other patents directed to practical NMR measurements while drilling include U.S. Pat. No. 5,705,927; U.S. Pat. No. 5,557,201; U.S. Pat. No. 5,280,243; U. S. Pat. Nos. 6,362,619, 8,373,412, and 8,143,887.

Multi-factor authentication (also MFA, two-factor authentication, two-step verification, TFA, T-FA or 2FA) is an approach to authentication which requires the presentation of two or more of the three authentication factors: a knowledge factor ("something only the user knows"), a possession factor ("something only the user has"), and an inherence factor ("something only the user is"). After presentation, each factor must be validated by the other party for authentication to occur.

A public key certificate (also known as a digital certificate or identity certificate) is an electronic document that uses a digital signature to bind a public key with an identity - information such as the name of a person or an organization, the address, and the email address. The certificate can be used to verify that a public key belongs to an individual.

In a typical public-key infrastructure (PKI) scheme, the signature will be of a certificate authority (CA). In a web of trust scheme, the signature is of either the user (a self-signed certificate) or other users ("endorsements"). In either case, the signatures on a certificate are attestations by the certificate signer that the identity information and the public key belong together.

US Pat. Appl. 20110270525 discloses that production of oil and gas requires specialized well equipment, such as pipes, valves, joints, and fittings that operate in extreme conditions, including, for example, high pressure, temperature, volatility, and corrosivity. Such conditions promote the rapid wear of well equipment and increase the potential for failure. Moreover, when well equipment does fail, the impact of the failure is typically catastrophic. For example, the failure of well equipment can result in massive explosions that hurt workers, destroy property, and halt operations for a significant time-potentially costing millions of dollars in liabilities, repairs, and lost revenue.

US patent 6907375 discloses oil recovery system diagnostics and analysis and the human interface for comprehension and affirmative reporting of events associated with the optimization of the oil recovery process. This presents a method for monitoring and analyzing a plurality of signals from monitors on at least one first drilling rig of a plurality of drilling rigs.

A multi-modality and MRI/NMR-based multimodality analysis system and methods for real-time measurements of drilling muds, especially for optimizing the recycling conditions and treatment of the mud, including continuous, one-step on-line measurement of mud-related parameters is still a long felt need. Moreover, a further unmet need is a measuring system for defining mud characteristics, such as its fluid phase, alkalinity, dispersion and the type of chemicals to be added in order to optimize and improve drilling efficiency, borehole stability, and other requirements as stated above.

SUMMARY OF THE INVENTION

It is thus an object of the invention to disclose an analysis system for use in a drilling mud recirculation system, said drilling mud recirculation system comprising: (a) a processing unit comprising an entrance and an exit, comprising at least one component selected from the group consisting of filtering means for filtering said drilling mud; cleaning means for cleaning said drilling mud; a shale shaker; at least one mud pit; and, at least one reservoir in closable fluid connection with said internal flow; (b) at least one conduit passing through said processing unit; said entrance and exit configured for fluid connection to a drilling apparatus via said conduit; (c) flow means for producing an internal flow of drilling mud through said conduit from said entrance to said exit, and, when said processing unit is fluidly connected to said drilling apparatus, a flow of drilling mud through said conduit from said drilling apparatus to said entrance and a return flow of drilling mud through said conduit from said exit to said drilling apparatus; (d) optionally, at least one component selected from the group consisting of flow rate measuring means for measuring rate of flow of said drilling mud through at least a portion of said at least one conduit; pressure measuring means for measuring pressure of said drilling mud in at least one portion of said at least one conduit; and, differential pressure measuring means for measuring a pressure difference in said flow of said drilling mud between two predetermined points along said conduit; and, (e) a recirculation control system for controlling said processing unit and said flow means; wherein said analysis system comprises: (a) analyzing means configured to provide a real-time analysis of at least one chemical or physical property of drilling mud flowing through said recirculating system and to report and/or to record in real time results of said analysis and/or to compare in real time results of said analysis with a stored value, said analyzing means comprising at least one magnetic resonance device disposed about said conduit; and (b) a data connection configured to communicate said results of said analysis from said analyzing means to at least one receiver selected from the group consisting of said recirculation control system; a receiving station not connected to said recirculation system; an operator of said recirculation system; and an operator of said analyzing means.

It is a further object of this invention to disclose such an analysis system, wherein said analyzing means additionally comprise means for determining the value of at least one chemical or physical property selected from the group consisting of electrical stability; cation exchange capacity; chloride content in water based mud; water hardness in water based mud; solubility of water based mud; saturation of water based mud; free water content; oil to water ratio; alkalinity; excess lime; phenophthalein alkalinity of mud filtrate; methyl orange alkalinity end point of mud filtrate; calcium chloride content; gas solubility in oil based mud; gas kicking parameters; chemical composition of formation gas; equivalent circulating density; water phase activity; rheological parameters; salinity of said drilling mud; water cut; and flow parameters.

It is a further object of this invention to disclose an analysis system as defined in any of the above, wherein said recirculation system comprises (a) a tank configured to hold spent drilling fluid; (b) a density separation device coupled to an outlet of said tank, said density separation device comprising an overflow outlet to provide an overflow stream and an underflow outlet to provide and underflow stream containing more dense material than said overflow stream; a pump configured to move spent drilling fluid from said tank to said density separation device; and (c) a fluid level control system configured to adjust a level of said spent drilling fluid in said tank to a level that prevents introduction of air into said pump.

It is a further object of this invention to disclose an analysis system as defined in any of the above, wherein said at least one conduit comprises at least one branch conduit and said magnetic resonance device is disposed about said branch conduit.

It is a further object of this invention to disclose an analysis system as defined in any of the above, wherein said analysis system additionally comprises sample extracting and transferring means for extracting a sample from said flow of drilling mud and transferring said sample to said analyzing means.

It is a further object of this invention to disclose an analysis system as defined in any of the above, wherein said analyzing means additionally comprises at least one analyzing means selected from the group consisting of thermometer; thermocouple; pressure sensor; differential pressure sensor; salinity sensor; densitometer; particle size analyzer; $CO_2$ concentration analyzer; infrared (IR) spectrometer; atomic absorption spectrometer; atomic emission spectrometer; atomic fluorescence spectrometer; alpha particle X-ray spectrometer; capillary electrophoresis apparatus; colorimeter; computed tomography apparatus; cyclic voltammetry apparatus; differential scanning calorimeter; energy dispersive spectrometer; field flow fractionation apparatus; flow injection analyzer; gas chromatograph (GC); high performance liquid chromatograph (HPLC); liquid chromatograph; mass spectrometer (MS); GC-MS; GC-IR; HPLC-IR; LC-IR; LC-MS; ion microprobe apparatus; inductively coupled plasma apparatus; ion-sensitive electrode; laser-induced breakdown spectrometer; Mössbauer spectrometer; neutron activation analyzer; particle-induced X-ray emission spectrometer; pyrolizer (PY); PY-GC-MS; Raman spectrometer; apparatus for determining refractive index; resonance enhanced multiphoton ionization spectrometer; transmission electron microscope; thermogravimetric analyzer; X-ray diffractometer; X-ray fluorescence spectrometer; X-ray microscope; automatic titrator; semi-automatic titrator.

It is a further object of this invention to disclose an analysis system as defined in any of the above, wherein said analyzing means additionally comprises at least one of the following: (a) means for determining the value of at least one rheological parameter selected from the group consisting of radial velocity profile; radial pressure profile; radial shear stress distribution $\tau(r)$; radial shear rate distribution $\gamma(r)$; density; viscosity; and yield point; and (b) a plurality of analyzing modules configured in a configuration chosen from parallel; series; and "one in the other."

It is a further object of this invention to disclose an analysis system as defined in any of the above, wherein said analysis system is configured in a manner chosen from the group consisting of configured to be portable and configured to be transportable in or on a truck.

The analysis system according to claim **1**, wherein at least one of the following is true: (a) at least a part of said drilling mud recycling equipment is configured to comply with a NeSSI specification; (b) at least a part of said drilling mud recycling equipment is configured to comply with ANSI/ISA SP76.00.2002 miniature, modular mechanical standard specifications; and (c) said drilling mud recycling equipment comprises a NeSSI communication bus.

It is a further object of this invention to disclose a method for online analysis and control of drilling mud flowing through a drilling mud recirculating system, wherein said method comprises: (a) defining at least one quality parameter $Q$; (b) defining a standard value of said quality parameter; (c) defining a quality criterion with respect to said standard value of quality parameter; (d) obtaining a drilling mud recirculating system and an analysis system as defined in any of the above; (e) obtaining a measured value of said at least one quality parameter from at least one analysis of said drilling mud performed by said analyzing means; (f) comparing said measured value with said standard value; and, (g) if said measured value fails to meet said quality criterion: (i) notifying said recirculation control system via said data to activate said processing unit to perform at least one predetermined action; and (ii) performing said at least one action until said measured value meets said quality criterion.

It is a further object of the invention to disclose such a method, wherein: (a) said step of defining at least one quality parameter comprises defining said quality parameter $\sqrt{k^2 + n^2}$, where $k$ and $n$ are determined from a relation $\tau(r) = k[\gamma(r)]^n$, where $\tau(r)$ is a radial shear stress of said drilling mud flowing through said conduit and $\gamma(r)$ is a radial shear rate distribution of said drilling mud flowing through said conduit; and (b) said step of obtaining a measured value of said at least one quality parameter comprises: determining said radial shear stress distribution $\tau(r)$; determining said radial shear rate distribution $\gamma(r)$; determining $k$ and $n$ from the relation $\tau(r) = k[\gamma(r)]^n$; and determining $Q$ from the relation

$$Q = \sqrt{k^2 + n^2}.$$

It is a further object of this invention to disclose a method as defined in any of the above, wherein said step of obtaining a measured value of said at least one quality parameter comprises determining the value of at least one parameter selected from the group consisting of T1; T2; radial T1 distribution; radial T2 distribution; and diffusion constant D.

It is a further object of this invention to disclose a method as defined in any of the above, wherein said step of performing said at least one action until said measured value meets said quality criterion comprises performing said at least one action until said measured value is within one standard deviation of said standard value.

It is a further object of this invention to disclose a method as defined in any of the above, wherein said step of defining at least one quality parameter $Q$ comprises defining $Q$ as at least one parameter selected from the group consisting of temperature; pressure; flow rate; viscosity; yield point; fluid level; particle size distribution; $CO_2$ concentration; intensity of at least one spectral feature; intensity of at least one chromatogram peak; concentration of at least one component; electrical stability; cation exchange capacity; chloride content in water based mud; water hardness in water based mud; solubility of water based mud; saturation of water based mud; free water content; oil to water ratio; alkalinity; excess lime; phenophthalein alkalinity of mud filtrate; methyl orange alkalinity end point of mud filtrate; calcium chloride content; gas solubility in oil based mud; gas kicking parameters; chemical composition of formation gas; equivalent circulating density; water phase activity; rheological parameters; salinity; and water cut.

It is a further object of this invention to disclose a method as defined in any of the above, wherein said step of obtaining a measured value of said at least one quality parameter comprises at least one step selected from the group consisting of determining a temperature of said drilling mud; determining a pressure of said drilling mud; determining a density of said drilling mud; determining a particle size distribution of said drilling mud; determining a $CO_2$ concentration in said drilling mud; obtaining an IR spectrum of said drilling mud; obtaining an atomic absorption spectrum of said drilling mud; obtaining an atomic emission spectrum of said drilling mud; obtaining an atomic fluorescence spectrum of said drilling mud; obtaining an alpha particle X-ray spectrum of said drilling mud; performing capillary electrophoresis on a sample of said drilling mud; performing colorimetry on a sample of said drilling mud; obtaining a computed tomograph of said drilling mud; obtaining a cyclic voltammogram of said drilling mud; obtaining a differential scanning calorimetry profile of said drilling mud; obtaining an energy dispersive spectrum of said drilling mud; performing field flow fractionation on a sample of said drilling mud; performing a flow injection analysis of said drilling mud; performing GC on a sample of said drilling mud; performing HPLC on a sample of said drilling mud; performing liquid chromatography on a sample of said drilling mud; obtaining a mass spectrum of a sample of said drilling mud; performing GC-MS on a sample of said drilling mud; performing GC-IR on a sample of said drilling mud; performing HPLC-IR on a sample of said drilling mud; performing LC-IR on a sample of said drilling mud; performing LC-MS on a sample of said drilling mud; obtaining an ion microprobe profile of said drilling mud; obtaining an inductively coupled plasma spectrum of said drilling mud; determining the concentration of at least one ion by using an ion-sensitive electrode; obtaining a laser-induced breakdown spectrum of said drilling mud; obtaining a Mössbauer spectrum of said drilling mud; obtaining a neutron activation analysis of said drilling mud; obtaining a particle-induced X-ray emission spectrum of said drilling mud; pyrolizing said drilling mud; performing PY-GC-MS on a sample of said drilling mud; obtaining a Raman spectrum of said drilling mud; determining a refractive index of said drilling mud; obtaining a resonance enhanced multiphoton ionization spectrum of a sample of said drilling mud; obtaining a transmission electron micrograph of a sample of said drilling mud; performing thermogravimetric analysis on said drilling mud; obtaining an X-ray diffraction pattern of a sample of said drilling mud; obtaining an X-ray fluorescence spectrum of said drilling mud; and obtaining an X-ray micrograph of said drilling mud.

It is a further object of this invention to disclose a method as defined in any of the above, wherein said step of performing said at least one predetermined action comprises performing an action selected from the group consisting of activating said shale shaker; adding water; adding at least one component; filtering said drilling mud; and adjusting a value of at least parameter selected from the group consisting of fluid level, flow rate, pressure, water concentration, concentration of at least one component, rate of addition of at least one component, shaking rate, shaking time, rate of change of shaking rate, rotation rate, rotation time, rate of change of rotation rate, tumbling rate, tumbling time, rate of change of tumbling rate, aeration rate, aeration time, rate of change of aeration rate, cutting time, cutting rate, rate of change of cutting rate, milling time, milling rate, rate of change of milling rate, heating rate, heating time, rate of change of heating rate, rate of change of heating rate, cooling rate, cooling time, rate of change of cooling rate, time held at a constant temperature, emulsification rate, de-emulsification rate, emulsification time, de-emulsification time, rate of change of emulsification rate, kneading rate, kneading time, rate of change of kneading rate, decanting time, decanting rate, rate of change of decanting rate.

It is a further object of this invention to disclose a method as defined in any of the above, wherein: (a) said analyzing system comprises a first analyzing means disposed upstream of said drilling apparatus and a second analyzing means disposed downstream of said drilling apparatus and upstream of said processing unit at a distance $L$ downstream from said first analyzing means; (b) said method comprises: determining a flow rate $R_f$ of said drilling mud through said conduit; and determining a transit time $\Delta t_f$ between said first analyzing means and said second analyzing means as $\Delta t_f = L/R_f$; (c) said step of obtaining a measured value of said at least one quality parameter comprises performing at least one analysis of said drilling mud by said first analyzing means at a time $t$, thereby obtaining a pre-drilling value of said quality parameter; performing at least one analysis of said drilling mud by said second analyzing means at a time $t +$

$\Delta t_f + \delta$, where $\delta$ may be less than zero, equal to zero, or greater than zero, thereby obtaining a post-drilling value of said quality parameter; determining a difference and/or correlation between said pre-drilling value and said post-drilling value; and, (d) said step of performing said at least one predetermined action until said measured value is within said predetermined range of said standard value comprises performing said predetermined action until said difference and/or correlation is within a predetermined limit.

It is a further object of this invention to disclose a method as defined in any of the above, wherein (a) said recirculation system comprises (i) a tank configured to hold spent drilling fluid; (ii) a density separation device coupled to an outlet of said tank, said density separation device comprising an overflow outlet to provide an overflow stream and an underflow outlet to provide and underflow stream containing more dense material than said overflow stream; a pump configured to move spent drilling fluid from said tank to said density separation device; and (iii) a fluid level control system configured to adjust a level of said spent drilling fluid in said tank to a level that prevents introduction of air into said pump; (b) said step of obtaining a measured value of said at least one quality parameter comprises determining said level of said spent drilling level in said tank; and (c) said step of performing said at least one predetermined action comprises adding water to bring said level of said spent drilling level in said tank to a level that prevents introduction of air into said pump.

It will be understood that, unless specifically stated otherwise, any of the above features may be combined in embodiments of the invention, even if particular features are specifically disclosed for different embodiments of the present invention.

## BRIEF DESCRIPTION OF THE DRAWINGS

A preferred embodiment of the current invention is described hereinbelow with reference to the following drawings:

Fig. 1 shows a system for drilling mud recycling line, in accordance with an embodiment of the present invention;

Fig. 2 presents further details of drilling mud recycling line, in accordance with an embodiment of the present invention;

Fig. 3 presents an analysis system operative in connection with a drilling rig according to an embodiment of the invention;

Fig. 4 presents a plurality of analyzing modules (308a-d) configured as an analysis system operative in connection with a drilling rig (mud inflow 305, mud outflow 309) according to an embodiment of the invention;

Fig. 5 presents a plurality of analyzing modules (308a-b) configured "one in the other" configuration as a part of an analysis system operative in connection with a drilling rig (mud inflow 305, mud outflow 309) according to an embodiment of the invention;

Fig. 6 presents an analysis system operative in connection with a drilling rig according to an embodiment of the invention;

Fig. 7 presents an analysis system operative in connection with a drilling rig according to an embodiment of the invention;

Fig. 8 presents an analysis system operative in connection with two drilling rigs (301a and 301b) according to an embodiment of the invention; and

Fig. 9 presents a certificating analysis system operative in connection with a drilling rig according to an embodiment of the invention.

## DETAILED DESCRIPTION OF THE PREFERRED EMBODIMENTS

In the following description, various aspects of the invention will be described. For the purposes of explanation, specific details are set forth in order to provide a thorough understanding of the invention. It will be apparent to one skilled in the art that there are other embodiments of the invention that differ in details without affecting the essential nature thereof. Therefore the invention is not limited by that which is illustrated in the figure and described in the specification, but only as indicated in the accompanying claims, with the proper scope determined only by the broadest interpretation of said claims. Features described for a specific embodiment may be readily combined with features of other embodiments, unless the contrary is explicitly stated. The separation is made for the purposes of clarity of disclosure only.

As used herein, the term "magnetic resonance device" (MRD) refers generically to any device, spectrometer, or other apparatus that uses magnetic resonance to obtain information about the composition or physical properties of a sample. Non-limiting examples of MRDs according to this definition include NMR spectrometers, MRI apparatus, NQR spectrometers, and EPR spectrometers.

As used herein, the term "quality parameter" refers to any measured, derived, or calculated parameter that can be used to assess the condition or quality of drilling mud by comparison with a standard value. Quality parameters can include measured values of chemical or physical properties of the drilling mud, or quantities derived or calculated from the measured values of chemical or physical properties of the drilling mud.

In some embodiments, the mud treatment system interfaces between the mud pits and drill string of the drilling system and the magnetic resonance device, which generates magnetic resonance images of the flow, from which rheological parameters of the drilling mud are determined. The component processing system fulfills the NeSSI protocols and requirements.

In the present invention, recent developments in industrial process improvement initiatives are adopted such as incorporating an on-line testing and adjusting system for iteratively adjusting the drilling mud's characteristics. Another recent development incorporated in the present invention is the integration of sensing devices and monitoring processes into the sampling system. The mechanism preferably adopted is the NeSSI (New Sensors/Sampling Initiative).

The NeSSI (New Sampling/Sensor Initiative) requirements fulfill the ANSI/ISA SP76.00.2002 miniature, modular mechanical standard and include mechanical systems associated with the fluid handling components. The ANSI/ISA standard is referenced by the International Electrotechnical Commission in publication IEC 62339-1:2006. Preferably, the present invention incorporates mechanical designs based on the ANSI/ISA SP76.00.02-2002 Standard and, further, preferably at least portions of the drilling system use mechanical designs based on the ANSI/ISA SP76.00.02-2002 Standard.

The NeSSI platform is a miniaturized, modular version of traditional sample gathering and handling methodologies, thus permitting the addition of components as standard modules, and the integration of the sensing system with the sampling system to form a single stand-alone unit for sample extraction and measurement. Using the NeSSI platform, the need for process corrections such as, but not limited to, alterations in the mud characteristics, may be detected earlier in the mud treatment system, thereby improving drilling rates and increasing safety.

The Magnetic Resonance Device (MRD) of Aspect Imaging Ltd (IL and US) is typically useful for the drilling mud analysis, especially, as in the present invention, for managing mud characteristics. The MRD is a relatively small nuclear magnetic resonance device with about 1 Tesla magnetic field, on the order of 0.5 m $\times$ 0.5 m $\times$ 1 m in size. Thus, the MRD device is ideal for incorporating in an on-line system, especially in a drilling mud recycling line.

The radial shear stress distribution $\tau(r)$ is determined from

$$\tau(r) = -\frac{\Delta P(r)}{2L} r$$

where $\Delta P(r)$ is the pressure difference between the entrance port and the exit port of the MRD at radial location *r*. Pressure sensors are located in proximity to the entrance and exit ports and the pressure sensors measure an axial pressure profile $P(r)$, as is known in the art. The pressure sensors are separated by a distance *L*.

The radial shear rate $\gamma(r)$ distribution is determined from

$$\dot{\gamma}(r) = \frac{dv(r)}{dr}$$

where $v(r)$ is the radial velocity profile.

The NMR images, the radial velocity profiles $v(r)$, the pressure profiles $P(r)$, the distance *L*, and the rheological parameters $\tau(r)$ and $\gamma(r)$ can be stored in a database and can be retrieved from the database as required.

According to a power law distribution for the radial shear stress $\tau(r)$, the radial shear stress $\tau(r)$ and the radial shear rate $\gamma(r)$ are related:

$$\tau(r) = k\big[\gamma(r)\big]^n$$

*where k and n are the power law stress parameters.*

Typically, the parameters *k* and *n* are determined by fitting an averaged radial shear rate distribution $\gamma(r)$ and an averaged shear stress distribution $\tau(r)$ for the radial values *r* to the power law distribution in equation (3).

A useful quality parameter, *Q*, is

$$Q = \sqrt{k^2 + n^2}$$

*where k and n* are found by fitting the averaged radial shear rate distribution $\gamma(r)$ and the averaged shear stress distribution $\tau(r)$ for the radial values *r* to the power law distribution in equation (3).

In preferred embodiments, a composition quality parameter, $Q_C$, is compared to a standard quality parameter, $Q_S$, where *Qc* is

$$Q_C = \sqrt{k_C^2 + n_C^2}$$

and $Q_S$ is

$$Q_S = \sqrt{k_S^2 + n_S^2}$$

In order to determine whether the sample fulfills the criteria, a quality test parameter $Q_T$ is compared to a quality criterion $\delta$ and the sample is acceptable if $Q_T < \delta$.

In one embodiment, $Q_T = |Q_S - Q_C|$, and the quality criterion is one standard deviation of the standard quality parameter $Q_S$.

In embodiments where the quality criterion $\delta$ is one standard deviation of the standard quality parameter $Q_S$, the standard quality parameter $Q_S$ is measured for a plurality of standardized samples of the composition and a standard quality parameter $Q_{S,i}$ is determined for each sample $i$. The standard deviation, $\sigma_d$, of the standard quality parameter $Q_S$ is found, as is known in the art, from the equation

$$\sigma_d = \sqrt{\frac{1}{N-1} \sum_{i=1}^{N} \left(Q_{S,i} - Q_S\right)^2}$$

where $Q_{S,i}$ is the standard quality parameter for the ith standardized sample of the product, $N$ is the number of standardized samples tested, and $Q_S$ is the mean of the standard quality parameters $Q_{S,i}$,

In other embodiments, the quality criterion is two standard deviations (95%) of the standard quality parameter $Q_S$. In yet other embodiments, 3 or 4 standard deviations, or even more, are used as a quality criterion.

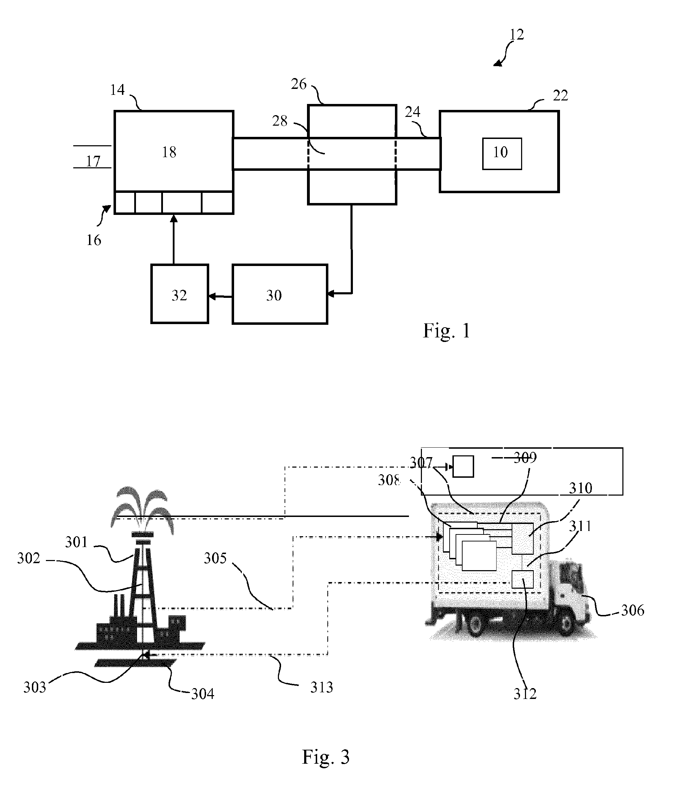

Reference is now made to FIG. **1**, which shows an embodiment of the system. In this embodiment, the drilling mud 10 is in a drilling mud recycling line 12. The drilling mud recycling line 12 comprises a component supply device 32 which stores and supplies, on demand drilling mud materials and raw materials, a drilling mud mixing vat system 14, a flow conduit 24, and drilling mud recycling equipment 22. It also comprises a magnetic resonance imaging device 26 encompassing at least a portion 28 of the flow conduit 24 and a processing system 30. During operation of the drilling mud recycling line, a plurality of components 16 as described hereinbelow are injected into the mixing vat system 14, where they combine with recycled mud 17 and are mixed until they form a composition 18 from recycled drilling mud 17 and components. The composition 18 is then injected via conduit 24 into drilling mud recycling equipment 22 and drilling mud 10 is produced in drilling mud recycling equipment 22.

The magnetic image resonance device 26 monitors the process in situ, on line and in real time. A sample of composition 18 is injected into flow conduit 24, such that the magnetic resonance imaging device 26 generates at least one magnetic resonance image of the composition 18 flowing through the conduit 24. The processing system 30 processes the at least one magnetic resonance image of the sample of the composition 18 to generate a quality test parameter $Q_T$, of the composition 18, as described below. The quality test parameter $Q_T$ is compared to a predetermined check value $Q_C$, as described below, and if the difference is greater than a predetermined amount, the raw material supply device 32 is instructed to supply a predetermined amount of at least one raw material 16 to mixing vat system 14. When the raw material 16 has been incorporated into composition 18, another sample of composition 18 is injected into flow conduit 24, another at least one magnetic resonance image is generated, and the process is repeated iteratively until the quality test parameter $Q_T$ differs from the predetermined check value $Q_C$ by less than the predetermined amount. In a batch system, the process will terminate when mixing vat system 14 is empty, although no adjustments to the composition 18 are expected to be necessary after an acceptable composition has been attained, and the process will recommence when mixing vat system 14 has been refilled with recycled mud 17 and a new batch of composition 18 has been produced. In a continuous process, there is continuous injection of drilling mud 17 into mixing vat system 14, so that the contents of mixing vat system 14 are constantly being replenished.

In preferred embodiments, the drilling mud recycling system 30 is configured to comply with ANSI/ISA SP76.00.2002 miniature, modular mechanical standard specifications.

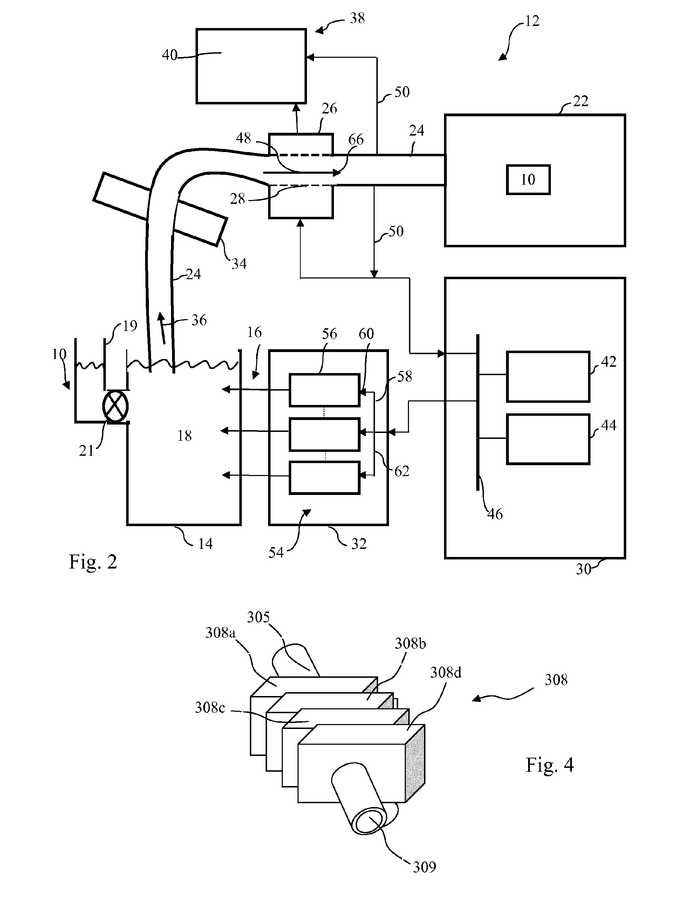

Reference is now made to FIG. **2**, which presents further details of the drilling mud recycling line 12, in accordance with a preferred embodiment of the present invention. As shown in FIG. **2**, the drilling mud recycling line 12 comprises a vat 14, a batch manifold 19 and control valve 21, a pump 34, a conduit 24, and drilling mud recycling equipment 22. It further comprises a raw material processing system 30 and a raw material supply device 32.

The raw material processing system 30 comprises a processor 42, a memory unit 44 and a communications bus 46, such as a NeSSI communications bus, enabling communications between all parts of the system.

The raw material processing system 30 communicates with the raw material supply device 32 by means of a communications line 52. The raw material supply device 32 comprises a plurality of N raw material reservoirs 54. Typically, each reservoir 56 contains at least one raw material, $I_{i=j}$. Each reservoir 56 includes a communications port 60, through which each reservoir 56 communicates with the communications line 52 via an internal communication bus 62.

In some embodiments, at least one reservoir 56 contains a mixture of at least two components, $I_{i=j, i=m}$.

A batch of a sample of the drilling mud 10 is input into the vat 14 from a batch manifold 19 via a control valve 21. A pump 34 pumps the composition 18 of the sample from the vat 14 to the production line 22 via nuclear magnetic imaging device 26. A drilling mud flow 36 flows through the conduit 24. At least a portion, 48, of flow 36 passes through at least a portion of nuclear magnetic imaging device 26, between entrance port 64 and exit port 66.

In further reference to FIG. **3**, the nuclear magnetic imaging device 26, which can be an NMR device, generates at least one magnetic resonance image 38 of the portion 48 of drilling mud flow 36 within the NMR device as a function of a radial location $r$, as is known in the art. The at least one magnetic resonance image 38 is processed by processor 42 to determine at least one radial velocity profile, $v(r)$, 40 of the composition 18, where the radial parameter $r$ is measured from the center of the conduit 24, such that $r = 0$ is the center of the conduit 24 and $r = R$ is the edge of the flow 36. The at least one magnetic resonance image 38 is transferred to the processor 42 via communication line 50 and communication bus 46. In some embodiments, communication line 50 comprises part of communication bus 46.

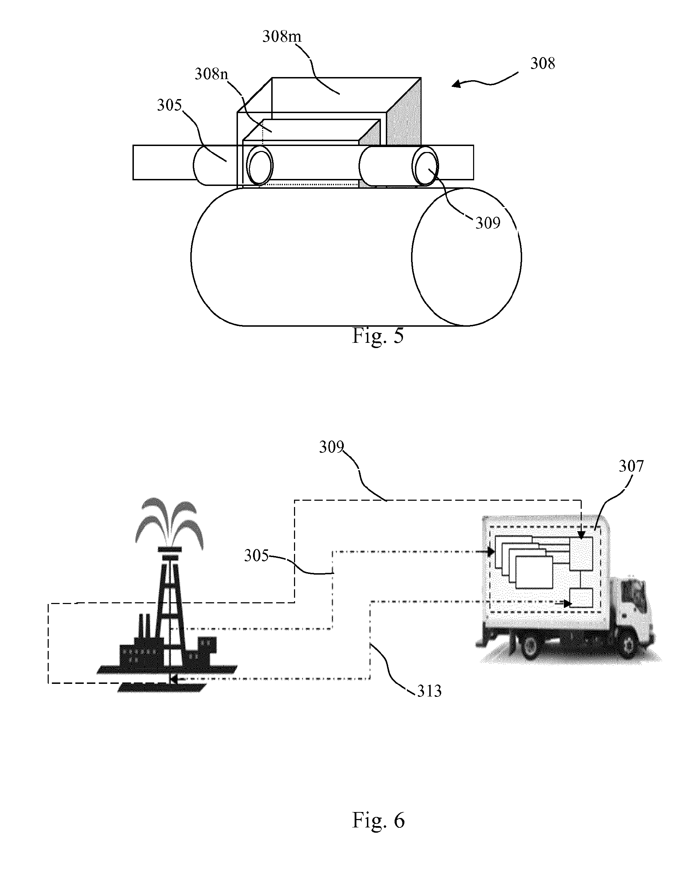

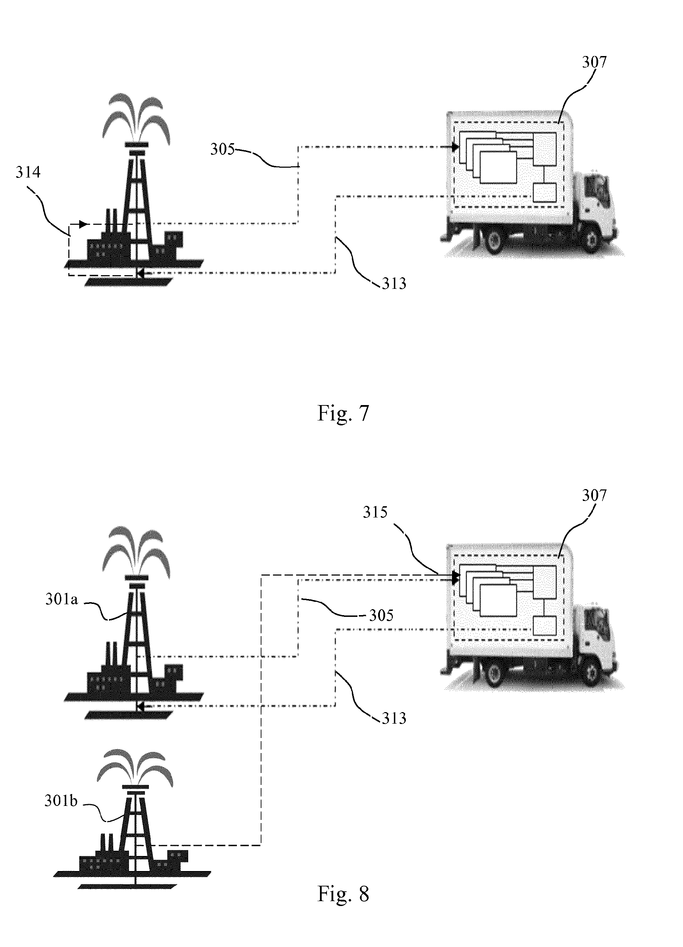

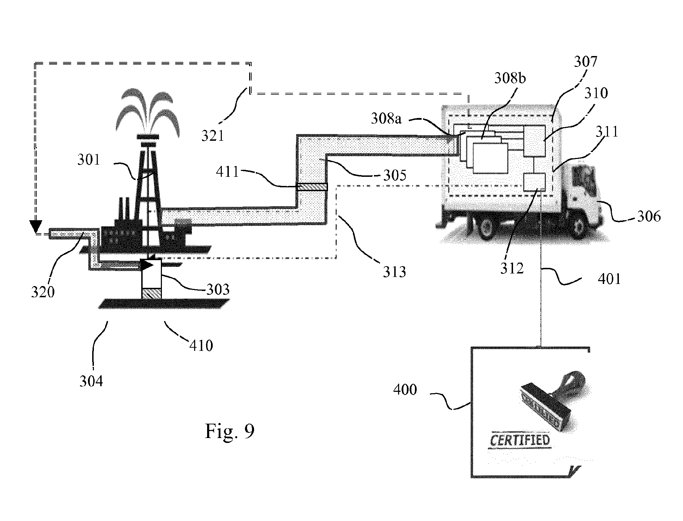

Reference is now briefly made to the following figures, wherein to FIG. **4** which presents a plurality of analyzing modules (**308a-d**) configured as an analysis system operative in connection with a drilling rig (mud inflow **305**, mud outflow **309**) according to an embodiment of the invention. FIG. **5** presents a plurality of analyzing modules (**308a-b**) configured in a "one inside the other" configuration as a part of an analysis system operative in connection with a drilling rig (mud inflow **305**, mud outflow **309**) according to an embodiment of the invention. FIG. **6** presents an analysis system operative in connection with a drilling rig according to an embodiment of the invention, with the inflow to the analysis system (**307**) fluidly connectable to the outgoing recycled drilling mud sampling outlet (**305**), the outflow of the analysis system (**309**) fluidly connectable to the drilling rig (**301**), and a communication line (**313**) between the rig and the analysis system for control of the mud quality. FIG. **7** presents an analysis system operative in connection with a drilling rig according to an embodiment of the invention with the inflow to the analysis system (**307**) fluidly connectable to the outgoing recycled drilling mud sampling outlet (**305**), and a communication line (**313**) between the rig and the analysis system for control of the mud quality where a further communication line (**314**) enables feedback control of the drilling mud. FIG. **8** presents an analysis system operative in connection with two drilling rigs (**301a** and **301b**) according to an embodiment of the invention where there are two inlets to the analysis system (**305** and **315**, respectively) and a communication line (**313**) between the rig and the analysis system for control of the mud quality; and FIG. **9** presents a certificating analysis system operative in connection with a drilling rig according to an embodiment of the invention. More details and examples are provided below.

Reference is now made to FIG. **9**. In the embodiment illustrated in the figure, the analysis system (**307**) provides a time-resolved analysis of drilling mud, the drilling process and drilling products. A first analyzing module **307** is disposed upstream of the borehole at position **320** to obtain a profile of drilling mud entering the borehole, and a second analyzing module is placed downstream of the borehole (**305**), to obtain a profile of drilling mud exiting the borehole. If the flow rate $R_f$ and the distance between the two analyzing modules $L$ are known, then the time it takes for the drilling mud to traverse the distance between them $\Delta t_f$ is easily calculated as $L/R_f$ By timing the measurements made by the two analyzing modules, a time-resolved multi-layered profile (Pt, **400**) of said mud sample can be obtained. The time-resolved profile can be obtained under continuous conditions by correlating measurements made by the second analyzing means $\Delta t_f$ after measurements made by the first analyzing module, or in batch mode by using the first analyzing means to make a measurement at time $t$ and the second analyzing module to make a measurement at time $t + \Delta t_f$ It is also possible to obtain a multi-layer profile if the second measurement is made at a time $t + \Delta t_f + \delta$ ($\delta$ can be negative) after the first measurement. This multi-layer profile can thus take into account parts of the flow that have reached differing levels of the borehole.

As said above, drilling mud is used to control subsurface pressures, lubricate the drill bit, stabilize the well bore, and carry the cuttings to the surface, among other functions. As the drill bit grinds rocks into drill cuttings, these cuttings become entrained in the mud flow and are carried to the surface. In order to return the mud to the recirculating mud system and to make the solids easier to handle, the solids must be separated from the mud.

It is thus according to one embodiment of the invention, wherein the following system is provided useful: In order to recycle drilling mud, solids control equipment are used, and a typical four stage solids control equipment used. In a first stage: A shale shaker is utilized: according to rig size, 1 to 3 sets of shale shakers will be used at the first stage solids control separation, e.g., this is done with API 4-0 60 shaker screens. Cuttings over 400 $\mu$m are separated in this stage. Then a desander and desilter are used as the second and third stage separation. A mud cleaner is utilized for these stages. It is a combination of shake shaker, desander and desilter. For smaller size rigs (usually under 750 hp), mud treated by shale shaker and mud cleaner can be used for drilling. Under some conditions, such as when the drilling depth is large and a high standard mud is requested, a decantering centrifuge will be used as fourth stage separation. When finer solids are to be separated, for example, for gas cut drilling mud, a vacuum degasser, a mud/gas separator (poor boy degasser) and ignition device will be used.

In parallel to the said mud-recycling scheme, an NMR/MRI-analysis system is integrally utilized to improve the recycling of the used drilling mud and to restore its characteristics to a predefined scale of characteristics, by following the following scheme: (i) defining parameters and values of optimal drilling mud; (ii) on-line and in situ analyzing parameters and values of used drilling mud, preferably, yet not exclusively, during the initial stages of the recycle, when the drilling mud exits from the drilling hole; (iii) comparing said optimal parameters and values and said on-line acquired parameters and values, namely determining the differences between those predefined parameters and value of the 'optimal drilling mud' and corresponding parameters and value of the 'actual drilling mud', thereby defining which recycle step is required, and further defining parameters and values; such as recycling temperature, operation time of each of the recycling steps, type and quantity of components to admix with said mud, admixing parameters etc, wherein the components can be selected from water, bentonite and the like, calcium containing salts and compositions thereof, surfactant (anionic, cationic or zwitterionic surfactants, for example), fresh drilling mud, water immiscible solutions etc. (iv) recycling the used drilling mud whilst continuously NMR/MRI analyzing its properties, thus online feedbacking the recycling system, until the characteristics of the recycled drilling mud equal (plus or minus an allowable predefined measure) the stored characteristics of the 'optimal drilling mud'. Thus, this novel NMR/MRI-drilling mud recycling integrated-system provides on-line, in-situ, one-continuous-step drilling where an optimal drilling mud is utilized, namely a drilling mud having predefined characteristics, such as rheological characteristics, fluid phase characteristics, alkalinity (calcium content and the like), dispersion characteristics and so on.

The use of NMR as a method for drill logging is well-known in the art. For example, European Pat. No. EP0835463 discloses an NMR logging method that is based on the differing values of the spin-lattice relaxation time T1, the lattice relaxation time T2, and the diffusion constant D for oil and water.

Thus, according to one embodiment of the invention, a time resolved or non-time resolved method of analyzing drilling parameters is provided, especially useful, in the integrated NMR/MRI drilling mud recycling system disclosed above. The method comprises, inter alia, the following steps: at least one step of imaging and timing a series of NMR/MRI images of drilling mud before the mud is re-used in a drilling hole ($T_{influx}$); either continuously or batch-wise flowing said time-resolved imaged drilling mud within said drilling hole whilst drilling said hole; after the flowing period, i.e., after the length of time between the drilling mud's influx and its outflow from the hole, at least one step of imaging and timing a series of NMR/MRI images of drilling mud after its use in a drilling hole ($T_{outflow}$); comparing at least one parameter of said inflowing mud (timed at $T_{influx}$) and said outflowing mud (timed at $T_{outflow}$); thereby defining the change of said parameter and analyzing parameters related with the drilling: such as debris shape and size, particle distribution and smoothness etc.

According to another embodiment of the invention, a similar method of analyzing drilled product is presented. This method comprises, inter alia, the following steps: at least one step of imaging and timing a series of NMR/MRI images of drilling mud before the mud's re-use in a drilling hole ($T_{influx}$); either continuously or batch-wise flowing said time-resolved imaged drilling mud within said drilling hole whilst drilling said hole, thereby providing said drilling mud as a flowing carrier of the drilled product: such as solid ground, earth samples, water oil, gas, ores, coal etc); after the flowing period, i.e., the length of time between the drilling mud's influx and its outflow from the hole, generating at least one image of the drilling mud after its use in a drilling hole ($T_{outflow}$); and then comparing at least one parameter of said inflowing mud (timed at $T_{influx}$) and said outflowing mud (timed at $T_{outflow}$); thereby defining the change of said parameter and analyzing said drilled product.

In these methods, the aforesaid step of comparing at least one parameter of said inflowing mud (timed at $T_{influx}$) and said outflowing mud (timed at $T_{outflow}$) may further comprise a step of measuring the relaxation times T1, T2 and the diffusion coefficient D as discussed above and a step of imaging and timing a series of NMR/MRI images of drilling mud, either timed at $T_{influx}$, timed at $T_{outflow}$, or both.

It is well within the scope of the invention wherein a novel analysis system for analysis and treatment of drilling mud is provided. The analysis system comprises, inter alia, an outgoing recycled drilling mud sampling outlet (see for example member 305 in figure 3) connected to a drilling rig (301); and an analysis system (307) coupled to said outlet, configured, by means of a plurality of analyzing modules (e.g., 308), to provide a time resolved multi-layered profile of said mud sample.

According to one embodiment of the technology herein presented, the aforesaid analysis system comprises a viscometer for determining apparent viscosity; plastic viscosity (PV), which is the resistance of fluid to flow; yield point (YP), which is the resistance of initial flow of fluid or the stress required in order to move the fluid; and yield point of bentonite drilling muds.

Additionally or alternatively, and according to yet another embodiment of the technology herein presented, the aforesaid analysis system comprises at least one of the following: thermometer, carbon dioxide analyzing means, such as an FTIR spectrometry gas analyzer; atomic absorption spectroscopy (AAS), atomic emission spectroscopy (AES), atomic fluorescence spectroscopy (AFS), alpha particle X-ray spectrometer (APXS), capillary electrophoresis (CE), chromatography, colorimetry, computed tomography, cyclic voltammetry (CV), differential scanning calorimetry (DSC), electron paramagnetic resonance (EPR, ESR), energy dispersive spectroscopy (EDS/EDX), field flow fractionation (FFF), flow injection analysis (FIA), gas chromatography (GC), gas chromatography-mass spectrometry (GC-MS), gas chromatography-IR spectroscopy (GC-IR), gel permeation chromatography-IR spectroscopy (GPC-IR), high performance liquid chromatography (HPLC), high performance liquid chromatography-IR spectroscopy (HPLC-IR), ion Microprobe (IM), inductively coupled plasma (ICP), ion selective electrode (ISE), laser induced breakdown spectroscopy (LIBS), liquid chromatography-IR spectroscopy (LC-IR), liquid chromatography-mass spectrometry (LC-MS), mass spectrometry (MS), Mössbauer spectroscopy, neutron activation analysis, nuclear magnetic resonance (NMR), particle induced X-ray emission spectroscopy (PIXE), pyrolysis gas chromatography mass spectrometry (PY-GC-MS), Raman spectroscopy, refractive index measurement, resonance enhanced multiphoton ionization (REMPI), transmission electron microscopy (TEM), thermogravimetric Analysis (TGA), X-ray diffraction (XRD), X-ray fluorescence spectroscopy (XRF), X-ray microscopy (XRM), automatic or semi-automatic titrators, e.g., for chloride analysis by titration with a silver nitrate solution, for e.g., $Mg^{+2}$ analysis by titration with standard Vesenate solution, and any combination thereof.

Additionally or alternatively, and according to yet another embodiment of the technology herein presented, the aforesaid analysis system comprises at least one of the following: flow meters, such as mechanical flow meters, e.g., piston meter/rotary piston, gear meter, oval gear meter, helical gear, nutating disk meter, variable area meter, turbine flow meter, Woltmann meter, single jet meter, paddle wheel meter, multiple jet meter, Pelton wheel, current meter, pressure-based meters, such as Venturi meter, orifice plate, Dall tube, Pitot tube, multi-hole pressure probe, cone meters, optical flow meters, open channel flow measurement (level to flow, area / velocity), dye testing, acoustic Doppler velocimetry, thermal mass flow meters, including the MAF sensor, vortex flow meters, electromagnetic, ultrasonic and coriolis flow meters, e.g., magnetic flow meters, non-contact electromagnetic flow meters, ultrasonic flow meters (Doppler, transit time), coriolis flow meters etc., laser doppler flow measurement and any combination thereof.

Additionally or alternatively, and according to yet another embodiment of the technology herein presented, the aforesaid analysis system comprises at least one of the following: U-tube viscometers, falling sphere viscometers, oscillating piston viscometer, vibrational viscometers, rotational viscometers, electromagnetically spinning sphere viscometer (EMS viscometer), Stabinger viscometer, bubble viscometer, micro-slit viscometers, Mooney-Line viscometer, NMR/MRI-bases viscometers and any combination thereof.

Additionally or alternatively, and according to yet another embodiment of the technology herein presented, the aforesaid analysis system comprises at least one of the following: pipe or capillary rheometers, rotational cylinder rheometers (cone and plate, linear shear etc), extensional rheometers (Rheotens, CaBER, FiSER, Sentmanat etc.), and other types of extensional rheometers: acoustic rheometers, falling plate rheometers, capillary/contraction flow rheometers, oscillating disc rheometer (ODR), moving die rheometer (MDR), other types of rheometer, and any combination thereof.

Additionally or alternatively, and according to yet another embodiment of the technology herein presented, the aforesaid analysis system comprises an electrical stability tester (EST), such as the Fann 23D available from Fann Instrument Company in Houston, Tex., which is typically used to characterize invert emulsion oil-based drilling fluids.

The thermometer is utilizable e.g., for indirect indications: in water-based mud, the yield point increases with following items: high temperature, the yield point (YP) tends to increase with temperature in water-based mud; contaminants such as carbon dioxide, salt, and anhydrite in the drilling fluids; over treatment of the drilling mud with lime or caustic soda. In oil-based mud, the causes of increasing in YP are as follows: drill solids - the more drill solids, the higher the YP; treatment $CO_2$ in a mud with lime (CaO) - the lime (CaO) chemically reacts with $CO_2$ to form Calcium Carbonate ($CaCO_3$) which will increase the YP; and low temperature - in an oil-based system, the low temperature increases the viscosity and the YP.

According to some embodiments of the technology herein presented, the aforesaid analysis system is utilizable for determining one or more of the following (i) electrical stability (ES) and other oil based mud properties; (ii) methylene blue test (MBT) or a cation exchange capacity which is used to determine the amount of reactive clay (clay-like materials) in water-based mud; (iii) chloride content in the water-based mud, and potentially maintaining the chloride content in the drilling fluid by feedbackedly adding or otherwise admixing salts such as potassium chloride and sodium chloride; (iv) total hardness, or water hardness of water based mud, e.g., by measurement of calcium and magnesium ions in water-based mud, by e.g., titration with standard Vesenate solution; (v) solubility of drilling mud and Spud Mud (water based mud); (vi) saturation and free water of drilling mud. Most drilling mud chemicals can be dissolved into the liquid phase until they reach a maximum solubility limit, namely their saturation point. Soluble solid will stop dissolving into the liquid phase when it reaches the saturation point; (vii) oil-water ratio (OWR); (viii) alkalinity or excess lime; (viii) phenolphthalein alkalinity of the mud filtrate (PM) or methyl orange alkalinity end point of mud filtrate (MF); (ix) in oil based mud, determining calcium chloride profile (content over time) to indicate possible calcium chloride contamination; thereby feedbackedly operating in one or more of the following steps: (a) adding more viscosifier(s) to improve the overall emulsion, e.g., whilst testing electrical stability (ES); (b) adding more lime, since oil and water will mix together well if the water is sufficiently basic, addition of lime will increase alkalinity of the mud and improve the emulsion; (c) adding wetting agent; and/or (d) diluting the system with fresh water to reduce overall chloride concentration and adding emulsifiers to improve mud emulsion; (e) gas solubility in oil based mud; (f) detecting and avoiding gas kicking, by treating problems of insufficient mud weight, improper hole fill-up during trips, swabbing, cut mud and/or lost circulation; (g) due to gas solubility in the oil-based mud, continuously or periodically on-line determining mud profile, including concurrently performing steps of determining wellbore temperature, determining pressure in the well, determining type of base fluid used to make the mud, determining chemical composition of formation gas etc.; (h) determining characteristics of the drilling mud, thereby optimizing the drilling mud and operation of the solid control equipment, hence minimizing drilling waste; (i) equivalent circulating density (ECD) - where the ECD typically increases when the YP increases and hole cleaning - when the drill is characterized by a large diameter hole, the YP in the drilling mud should be higher in order to help hole cleaning efficiency, and (j) water phase activity of drilling mud. Water phase activity (WPA) is a relative measure of how easily water can evaporate from the drilling mud. WPA is onlinely measured, by means of said analysis system , by determining the fraction of water vapor in the air space of a closed container of liquid solution; the evaporation rate for pure water is larger than the evaporation rate for water containing dissolved salts; (k) rheological parameters; (l) salinity of the drilling fluid; (m) water cut, namely the ratio of water produced compared to the volume of total liquids produced. Water cut is determined by various means, such as radio or microwave frequency and NIR measurements, gamma ray based instruments etc. (n) flow parameters; and any combination thereof.

Additionally or alternatively, and according to yet another embodiment of the technology herein presented, the aforesaid analysis system can determine contaminants such as, but not limited to: (a) air, which can enter the top of the drill string during connection of a new section of drill pipe.; (b) pipe scale and pipe dope from inside the drill string; (c) rock sloughing or rubbing off formations up hole from the drill bit; (d) cuttings that have bedded or built up because of improper hole cleaning dynamics that are mobilized by changes in drilling fluid viscosity, pumping rate, or drill string or collar rotation; (e) uphole fluids that flow or are swabbed into the annulus; and any combination thereof.

It should be noted that additives in the drilling fluid such as weighting agents and lost-circulation material are not considered contaminants, but preferably are monitored because they can interfere with analytical observations and descriptions or give interfering instrument responses.

It should further be noted that some base fluids for drilling fluid, particularly some of the synthetic fluids, and some of the chemical additives can make it difficult to determine whether a chemical found in the drilling fluid is there intentionally, has entered the drilling fluid from the formation, or as a contaminant. As a non-limiting example, some sulfate or sulfonate wetting agents can give a false positive $H_2S$ indication.

In some embodiments, the shape, size and porosity of the cuttings, along with analysis of their composition, the flow speed of the mud, as described hereinabove, and the depth of the hole, known from the length of the drill string, is used to generate a mud log on-line and in real time.

In embodiments of the present invention in which a mud log is generated, analysis of the rock fragments entrained in the drilling mud is done automatically, thereby ensuring that the analyzed fragments accurately represent the rock as cut.

In some embodiments, physical samples of the drilling fluid can be removed from the mud line for testing and verification purposes. Such physical samples can be collected either automatically, to a predetermined schedule, or on demand and, preferably, labeled automatically. The label preferably comprises a unique identifier, the time the physical sample was collected, and any combination thereof. The unique identifier, the time the physical sample was collected, and any combination thereof is preferably stored in a database. Other information recordable on the label and storable in the database includes, but is not limited to, the temperature of the fluid at the time of collection and the flow rate of the fluid at the time of collection.

In preferred embodiments, the device comprises a testing mode, in which a testing material of predetermined composition is run through the analysis system. The known composition can comprise predetermined fractions of solid, liquid and gas, with the solid, liquid and gas comprising predetermined materials. It can also comprise rock fragments, of a predetermined size distribution and a predetermined shape distribution, with the rock fragments comprising known materials of a known chemical composition. Comparison of the analysis system results with the predetermined composition enables calibration of the analysis system and thereby enables verification of the proper functioning of the analysis system.

In preferred embodiments, the database is read-only.

In preferred embodiments, only authorized personnel can operate the analysis system and, in variants of these embodiments, a higher level of authorization is needed in order to use the testing mode or calibration mode of the analysis system.

Therefore, the accuracy of results generated by the system can be verified, and the results certified. Certification can be first party certification, wherein the mud engineer does the testing and certifies the results, or it can be third-party certification, wherein an employee of a testing company or testing organization does the testing and certifies the results.

The results of the analyses can be validated, both as to the at least one parameter determined and, in some embodiments, as to the underground location to which the results refer.

The database (and the mud log) can provide a specification for the formation since, as described hereinabove, the accuracy of the data is verifiable.

Furthermore, in addition to controlling the mud characteristics via a feedbacked mechanism, the present invention can provide a specification as a function of time of at least one characteristic of the drilling fluid such as, but not limited to, the fluid's rheology, rheometry, density, salinity, water cut, and contaminant fraction.

**Claims**

1. An analysis system for use in a drilling mud recirculation system, said drilling mud recirculation system comprising:

   a processing unit comprising an entrance and an exit, comprising at least one component selected from the group consisting of filtering means for filtering said drilling mud; cleaning means for cleaning said drilling mud; a shale shaker; at least one mud pit; and, at least one reservoir in closable fluid connection with said internal flow;
   at least one conduit passing through said processing unit;
   said entrance and exit configured for fluid connection to a drilling apparatus via said conduit;
   flow means for producing an internal flow of drilling mud through said conduit from said entrance to said exit, and, when said processing unit is fluidly connected to said drilling apparatus, a flow of drilling mud through said conduit from said drilling apparatus to said entrance and a return flow of drilling mud through said conduit from said exit to said drilling apparatus;
   optionally, at least one component selected from the group consisting of:

      flow rate measuring means for measuring rate of flow of said drilling mud through at least a portion of said at least one conduit;
      pressure measuring means for measuring pressure of said drilling mud in at least one portion of said at least one conduit; and,
      differential pressure measuring means for measuring a pressure difference in said flow of said drilling mud between two predetermined points along said conduit;

   and,
   a recirculation control system for controlling said processing unit and said flow means;

   wherein said analysis system comprises:

      analyzing means configured to provide a real-time analysis of at least one chemical or physical property of drilling mud flowing through said recirculating system and to report and/or to record in real time results of said analysis and/or to compare in real time results of said analysis with a stored value, said analyzing means comprising at least one magnetic resonance device disposed about said conduit; and,
      a data connection configured to communicate said results of said analysis from said analyzing means to at least one receiver selected from the group consisting of said recirculation control system; a receiving station not connected to said recirculation system; an operator of said recirculation system; and an operator of said analyzing means.

2. The analysis system according to claim **1**, wherein said analyzing means additionally comprise means for determining the value of at least one chemical or physical property selected from the group consisting of electrical stability; cation exchange capacity; chloride content in water based mud; water hardness in water based mud; solubility of water based mud; saturation of water based mud; free water content; oil to water ratio; alkalinity; excess lime; phenophthalein alkalinity of mud filtrate; methyl orange alkalinity end point of mud filtrate; calcium chloride content; gas solubility in oil based mud; gas kicking parameters; chemical composition of formation gas; equivalent circulating density; water phase activity; rheological parameters; salinity of said drilling mud; water cut; and flow parameters.

3. The analysis system according to claim **1**, wherein said recirculation system comprises:

   a tank configured to hold spent drilling fluid;
   a density separation device coupled to an outlet of said tank, said density separation device comprising an overflow outlet to provide an overflow stream and an underflow outlet to provide and underflow stream containing more dense material than said overflow stream; a pump configured to move spent drilling fluid from said tank to said density separation device; and,
   a fluid level control system configured to adjust a level of said spent drilling fluid in said tank to a level that prevents introduction of air into said pump.

4. The analysis system according to claim **1**, wherein said analysis system additionally comprises sample extracting and transferring means for extracting a sample from said flow of drilling mud and transferring said sample to said analyzing means.

5. The analysis system according to claim **1**, wherein said analyzing means additionally comprises at least one analyzing means selected from the group consisting of thermometer; thermocouple; pressure sensor; differential pressure sensor; salinity sensor; densitometer; particle size analyzer; $CO_2$ concentration analyzer; infrared (IR) spectrometer; atomic absorption spectrometer; atomic emission spectrometer; atomic fluorescence spectrometer; alpha particle X-ray spectrometer; capillary electrophoresis apparatus; colorimeter; computed tomography apparatus; cyclic voltammetry apparatus; differential scanning calorimeter; energy dispersive spectrometer; field flow fractionation apparatus; flow injection analyzer; gas chromatograph (GC); high performance liquid chromatograph (HPLC); liquid chromatograph; mass spectrometer (MS); GC-MS; GC-IR; HPLC-IR; LC-IR; LC-MS; ion microprobe apparatus; inductively coupled plasma apparatus; ion-sensitive electrode; laser-induced breakdown spectrometer; Mössbauer spectrometer; neutron activation analyzer; particle-induced X-ray emission spectrometer; pyrolizer (PY); PY-GC-MS; Raman spectrometer; apparatus for determining refractive index; resonance enhanced multiphoton ionization spectrometer; transmission electron microscope; thermogravimetric analyzer; X-ray diffractometer; X-ray fluorescence spectrometer; X-ray microscope; automatic titrator; semi-automatic titrator.

6. The analysis system according to claim **1**, wherein said analyzing means additionally comprises at least one of the following:

means for determining the value of at least one rheological parameter selected from the group consisting of radial velocity profile; radial pressure profile; radial shear stress distribution $\tau(r)$; radial shear rate distribution $\gamma(r)$; density; viscosity; and yield point; and,

a plurality of analyzing modules configured in a configuration chosen from parallel; series; and "one in the other."

7. The analysis system according to claim **1**, wherein said analysis system is configured in a manner chosen from the group consisting of configured to be portable and configured to be transportable in or on a truck.

8. The analysis system according to claim **1**, wherein at least one of the following is true:

at least a part of said drilling mud recycling equipment is configured to comply with a NeSSI specification;

at least a part of said drilling mud recycling equipment is configured to comply with ANSI/ISA SP76.00.2002 miniature, modular mechanical standard specifications; and,

said drilling mud recycling equipment comprises a NeSSI communication bus.

9. A method for online analysis and control of drilling mud flowing through a drilling mud recirculating system, wherein said method comprises:

defining at least one quality parameter $Q$;
defining a standard value of said quality parameter;
defining a quality criterion with respect to said standard value of said quality parameter;
obtaining a drilling mud recirculating system and an analysis system according to claim **1**;
obtaining a measured value of said at least one quality parameter from at least one analysis of said drilling mud performed by said analyzing means;
comparing said measured value with said standard value; and,
if said measured value fails to meet said quality criterion:

notifying said recirculation control system via said data to activate said processing unit to perform at least one predetermined action; and,
performing said at least one action until said measured value meets said quality criterion.

10. The method according to claim **9**, wherein:

said step of defining at least one quality parameter comprises defining said quality parameter $Q = \sqrt{k^2 + n^2}$, where $k$ and $n$ are determined from a relation $\tau(r) = k[\gamma(r)]^n$, where $\tau(r)$ is a radial shear stress of said drilling mud flowing through said conduit and $\gamma(r)$ is a radial shear rate distribution of said drilling mud flowing through said conduit; and,
said step of obtaining a measured value of said at least one quality parameter comprises:

determining said radial shear stress distribution $\tau(r)$;
determining said radial shear rate distribution $\gamma(r)$;
determining $k$ and $n$ from the relation $\tau(r) = k[\gamma(r)]^n$; and,
determining $Q$ from the relation $Q = \sqrt{k^2 + n^2}$.

11. The method according to claim **9**, wherein said step of obtaining a measured value of said at least one quality parameter comprises determining the value of at least one parameter selected from the group consisting of T1; T2; radial T1 distribution; radial T2 distribution; and diffusion constant D.

12. The method according to claim **9**, wherein said step of defining at least one quality parameter Q comprises defining Q as at least one parameter selected from the group consisting of temperature; pressure; flow rate; viscosity; yield point; fluid level; particle size distribution; $CO_2$ concentration; intensity of at least one spectral feature; intensity of at least one chromatogram peak; concentration of at least one component; electrical stability; cation exchange capacity; chloride content in water based mud; water hardness in water based mud; solubility of water based mud; saturation of water based mud; free water content; oil to water ratio; alkalinity; excess lime; phenophthalein alkalinity of mud filtrate; methyl orange alkalinity end point of mud filtrate; calcium chloride content; gas solubility in oil based mud; gas kicking parameters; chemical composition of formation gas; equivalent circulating density; water phase activity; rheological parameters; salinity; and water cut.

13. The method according to claim **9**, wherein said step of obtaining a measured value of said at least one quality parameter comprises at least one step selected from the group consisting of determining a temperature of said drilling mud; determining a pressure of said drilling mud; determining a density of said drilling mud; determining a particle size distribution of said drilling mud; determining a $CO_2$ concentration in said drilling mud; obtaining an IR spectrum of said drilling mud; obtaining an atomic absorption spectrum of said drilling mud; obtaining an atomic emission spectrum of said drilling mud; obtaining an atomic fluorescence spectrum of said drilling mud; obtaining an alpha particle X-ray spectrum of said drilling mud; performing capillary electrophoresis on a sample of said drilling mud; performing colorimetry on a sample of said drilling mud; obtaining a computed tomograph of said drilling mud; obtaining a cyclic voltammogram of said drilling mud; obtaining a differential scanning calorimetry profile of said drilling mud; obtaining an energy dispersive spectrum of said drilling mud; performing field flow fractionation on a sample of said drilling mud; performing a flow injection analysis of said drilling mud; performing GC on a sample of said drilling mud; performing HPLC on a sample of said drilling mud; performing liquid chromatography on a sample of said drilling mud; obtaining a mass spectrum of a sample of said drilling mud; performing GC-MS on a sample of said drilling mud; performing GC-IR on a sample of said drilling mud; performing HPLC-IR on a sample of said drilling mud; performing LC-IR on a sample of said drilling mud; performing LC-MS on a sample of said drilling mud; obtaining an ion microprobe profile of said drilling mud; obtaining an inductively coupled plasma spectrum of said drilling mud; determining the concentration of at least one ion by using an ion-sensitive electrode; obtaining a laser-induced breakdown spectrum of said drilling mud; obtaining a Mössbauer spectrum of said drilling mud; obtaining a neutron activation analysis of said drilling mud; obtaining a particle-induced X-ray emission spectrum of said drilling mud; pyrolizing said drilling mud; performing PY-GC-MS on a sample of said drilling mud; obtaining a Raman spectrum of said drilling mud; determining a refractive index of said drilling mud; obtaining a resonance enhanced multiphoton ionization spectrum of a sample of said drilling mud; obtaining a transmission electron micrograph of a sample of said drilling mud; performing thermogravimetric analysis on said drilling mud; obtaining an X-ray diffraction pattern of a sample of said drilling mud; obtaining an X-ray fluorescence spectrum of said drilling mud; and obtaining an X-ray micrograph of said drilling mud.

14. The method according to claim **9**, wherein said step of performing said at least one predetermined action comprises performing an action selected from the group consisting of activating said shale shaker; adding water; adding at least one component; filtering said drilling mud; and adjusting a value of at least parameter selected from the group consisting of fluid level, flow rate, pressure, water concentration, concentration of at least one component, rate of addition of at least one component, shaking rate, shaking time, rate of change of shaking rate, rotation rate, rotation time, rate of change of rotation rate, tumbling rate, tumbling time, rate of change of tumbling rate, aeration rate, aeration time, rate of change of aeration rate, cutting time, cutting rate, rate of change of cutting rate, milling time, milling rate, rate of change of milling rate, heating rate, heating time, rate of change of heating rate, rate of change of heating rate, cooling rate, cooling time, rate of change of cooling rate, time held at a constant temperature, emulsification rate, de-emulsification rate, emulsification time, de-emulsification time, rate of change of emulsification rate, kneading rate, kneading time, rate of change of kneading rate, decanting time, decanting rate, rate of change of decanting rate.

15. The method according to claim **9**, wherein:

said analyzing system comprises a first analyzing means disposed upstream of said drilling apparatus and a second analyzing means disposed downstream of said drilling apparatus and upstream of said processing unit at a distance L downstream from said first analyzing means;

said method comprises:

determining a flow rate $R_f$ of said drilling mud through said conduit; and,

determining a transit time $\Delta t_f$ between said first analyzing means and said second analyzing means as $\Delta t_f = L/R_f$;

said step of obtaining a measured value of said at least one quality parameter comprises:

performing at least one analysis of said drilling mud by said first analyzing means at a time $t$, thereby obtaining a pre-drilling value of said quality parameter; and,

performing at least one analysis of said drilling mud by said second analyzing means at a time $t + \Delta t_f + \delta$, where $\delta$ may be less than zero, equal to zero, or greater than zero, thereby obtaining a post-drilling value of said quality parameter;

determining a difference and/or correlation between said pre-drilling value and said post-drilling value; and,

said step of performing said at least one predetermined action until said measured value is within said predetermined range of said standard value comprises performing said predetermined action until said difference and/or correlation is within a predetermined limit.

Fig. 1

Fig. 3

Fig. 2

Fig. 4

308m

308n

305

308

309

Fig. 5

309

307

305

313

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6268726 B
- US 5705927 A
- US 5557201 A
- US 5280243 A
- US 6362619 B
- US 8373412 B
- US 8143887 B
- US 20110270525 A
- US 6907375 B
- EP 0835463 A

**Non-patent literature cited in the description**

- **M. G. PRAMMER ; E. DRACK, G. et al.** The Magnetic-Resonance While-Drilling Tool: Theory and Operation. *SPE Reservoir Evaluation & Engineering,* 2001, vol. 4 (4), 72495
- **COUSSOT et al.** Oil & Gas Science and Technology. *Rev. IFP,* 2004, vol. 59 (1), 23-29